# EUROPEAN PATENT APPLICATION

(11) **EP 4 742 367 A1**
(43) Date of publication of application: **13.05.2026**
(21) Application number: 24836339.2
(22) Date of filing: 03.07.2024
(51) Int. Cl.: H01M 10/613, H01M 10/66, H01M 10/6556, H01M 10/653, H01M 10/625, H01M 10/6551, H01M 50/574, H01M 50/502

(54) **COOLING MODULE AND BATTERY DISCONNECT DEVICE COMPRISING SAME**

(30) Priority: 05.07.2023 KR 20230086960
(71) Applicant: LS E-MOBILITY SOLUTIONS CO., LTD., Cheongju-si, Chungcheongbuk-do 28439 (KR)
(72) Inventor: KIM, Jaeseop, Cheongju-si, Chungcheongbuk-do 28439 (KR)
(74) Representative: K&L Gates LLP
(86) International application number: PCT/KR2024/009419
(87) International publication number: WO 2025/009892

(57) **Abstract**

A cooling module is provided. According to an aspect of the present invention, the cooling module comprises: a heat transfer body capable of being coupled to an external busbar so as to receive heat generated in the busbar; a cooling pipe coupled to the heat transfer body and configured such that a cooling fluid can flow therein so as to receive the heat and discharge same to the outside; and a heat dissipation body having a heat absorption surface provided on one side thereof and configured to be able to contact the busbar such that the heat can be transferred from the busbar thereto, and having a heat dissipation surface provided on the other side thereof so as to contact the heat transfer body such that the transferred heat can be transferred to the heat transfer body. The heat dissipation body may be made of a material having a predetermined degree of elasticity or having a predetermined degree of fluidity such that, at least during installation, same can be deformed according to the shape of the space in which same is contained, and may be disposed between the heat transfer body and the busbar.

## Description

### Technical Field

The present disclosure relates to a cooling module and a battery disconnect device including the same, and more particularly, to a cooling module using a cooling fluid and a battery disconnect device including the same.

### Background Art

The trend of restricting the use of fossil fuels to prevent climate change continues. This trend is affecting daily life as well as the field of power generation to produce electricity.

As a result, research is actively being conducted to drive a vehicle using electricity or hydrogen, such as an electric vehicle (EV), a hybrid electric vehicle (HEV), and a hydrogen vehicle (HV), away from conventional vehicles that generate power using fossil fuels such as gasoline or diesel.

The above-described EV, HEV, HV, and the like, essentially include a battery for supplying power to drive the vehicle. As an operation of a vehicle and a battery driving the vehicle continues, high heat is generated from the battery and a battery disconnect unit (BDU), which is densely packed with devices for switching the battery and loads, such as switches.

In this case, when the generated high heat is left as it is, there is a possibility that the battery, the BDU, or various elements provided in the vehicle can be damaged. Therefore, compared to vehicles with traditional structures, that is, vehicles driven by fossil fuels, the need for effective heat dissipation of batteries in the EV, HEV, HV, and the like increases.

A method widely used for cooling a battery can be divided into air cooling and water cooling. For conventional vehicles that use fossil fuels, sufficient cooling efficiency can be expected even with air cooling, as the amount of heat generated from the battery is not excessive. On the contrary, the EV, HEV, HV, and the like, including a battery that dissipates high heat generally are provided with water cooling as it is difficult to cool them with air cooling alone.

However, when cooling a battery with water cooling, a passage in which a heat transfer medium, that is, water, flows to receive heat of the battery must be physically completely separated from the battery. That is, the passage must allow water to flow thereinside, but communication with the outside must be blocked.

Therefore, in order to cool the battery using water cooling, additional members such as a rubber ring are required to prevent any leakage of water. This causes an increase in unit price of the product and a decrease in assemblability. Furthermore, an airtight empty space can occur between each component, resulting in a problem that cooling efficiency decreases as the heat transfer rate decreases.

Accordingly, there has been an urgent need for the development of a cooling module having high cooling efficiency and a battery disconnect device including the same by improving a heat transfer rate between a heat-generating component and a heat-absorbing component.

### Disclosure of Invention

### Technical Problem

The present disclosure is contrived in consideration of the above-described circumstances, and an aspect of the present disclosure is to provide a cooling module having high cooling efficiency and a battery disconnect device including the same.

Another aspect of the present disclosure is to provide a cooling module having a structure capable of stably securing electrical insulation from an electrical device coupled thereto, and a battery disconnect device including the same.

Still another aspect of the present disclosure is to provide a cooling module having a structure capable of preventing loss of a medium for cooling and being insulated from a battery voltage, and a battery disconnect device including the same.

Yet still another aspect of the present disclosure is to provide a cooling module having a structure applicable to various sizes of electrical devices and a battery disconnect device including the same.

The problems of the present disclosure are not limited to the above-mentioned problems, and other problems that are not mentioned herein will be clearly understood by those skilled in the art from the description below.

### Solution to Problem

According to one aspect of the present disclosure, there is provided a cooling module including a heat transfer body that can be coupled to an external busbar so as to receive heat generated from the busbar; a cooling pipe coupled to the heat transfer body to allow a cooling fluid to flow therein so as to receive the heat and dissipate it to the outside; and a heat dissipation body having a heat absorption surface that can be in contact with the busbar to receive the heat from the busbar on one side thereof, and having a heat dissipation surface that is in contact with the heat transfer body to transfer the received heat to the heat transfer body on the other side thereof, wherein the heat dissipation body is made of a material having a predetermined elasticity or a predetermined fluidity that can be deformed to fit a shape of a space accommodated at least during installation, and is interposed between the heat transfer body and the busbar.

In this case, the heat dissipation body can be configured to seal at least one region between the heat transfer body and the busbar.

In this case, the heat transfer body can include a heat transfer body part that can be coupled to the busbar; and a pipe coupling part provided in the heat transfer body part to which the cooling pipe is joined.

In this case, the heat transfer body part can include an outer surface exposed to the outside, and the pipe coupling part can be provided on the outer surface of the heat transfer body part so as to allow at least a portion of the cooling pipe to be exposed to the outside.

In this case. the pipe coupling part can include a pipe coupling groove arranged to be recessed on the outer surface to accommodate at least a portion of the cooling pipe and provided along an extension direction of the cooling pipe.

In this case, the cooling pipe can be configured such that a depth of the pipe coupling groove is deeper than a radius of the cooling pipe.

In this case, the heat transfer body part can extend along an extension direction of the cooling pipe.

In this case, the heat transfer body part can include an upper surface, a lower surface, and a side surface provided along the extension direction of the cooling pipe, and the heat dissipation body can be configured to entirely surround the lower surface and the side surface of the heat transfer body part.

In this case, the cooling module can further include a heat dissipation body frame that supports the heat dissipation body to fix the heat dissipation body in position between the heat transfer body and the busbar or to maintain a form of the heat dissipation body.

In this case, the heat dissipation body frame can be made of a material having a predetermined insulating property.

In this case, the heat dissipation body frame can include a bottom part covering a lower surface of the heat transfer body part; and a side wall part covering a side surface of the heat transfer body part, wherein at least a portion of the heat dissipation body is interposed between a lower surface of the heat transfer body part and the bottom part and between a side surface of the heat transfer body part and the side wall part.

In this case, a contact hole to allow the heat absorption surface of the heat dissipation body to be exposed can be provided on the bottom part.

In this case, the contact hole can have a shape corresponding to a shape of the busbar.

In this case, the contact hole can be provided in plurality to correspond to a number of the plurality of busbars.

In this case, the heat dissipation body can be configured to surround an outer periphery of the cooling pipe, and the heat dissipation surface can be in contact with the pipe coupling part.

In this case, the cooling pipe can have a rectangular cross-section perpendicular to an extension direction.

In this case, the heat transfer body part can have a block shape extending along an extension direction of the cooling pipe, wherein the pipe coupling part includes a pipe coupling groove arranged to be recessed on one surface of the heat transfer body part so as to allow the cooling pipe surrounded by the heat dissipation body to be accommodated.

In this case, the heat transfer body can include a heat dissipation fin provided on the other surface of the heat transfer body part so as to allow heat transferred to the heat transfer body part to be dissipated to the outside.

In this case, the heat dissipation body can be made of a thermal conductive pad, a thermal conductive gel or a thermal conductive rubber.

According to another aspect of the present disclosure, there is provided a battery disconnect device including a disconnect module including a housing, a plurality of contactors arranged inside the housing to be electrically connected to an external power source and external loads, respectively, and at least one busbar electrically connected to at least one of the plurality of contactors; and a cooling module including a heat transfer body coupled to the busbar to receive heat, a cooling pipe coupled to the heat transfer body to allow a cooling fluid to flow therein so as to receive the heat and dissipate it to the outside, and a heat dissipation body having a heat absorption surface that can be in contact with the busbar on one side thereof and having a heat dissipation surface that is in contact with the heat transfer body on the other side thereof, wherein the heat dissipation body is interposed between the heat transfer body and the busbar and is made of a material having a predetermined elasticity or a predetermined fluidity that can be deformed to fit a shape therebetween at least during installation so as to seal therebetween.

In this case, the external power source can be a battery provided in an electric vehicle.

### Advantageous Effects of Invention

A cooling module and a battery disconnect device including the same according to one aspect of the present disclosure can be configured such that a heat dissipation body having a predetermined elasticity or a predetermined fluidity at least during installation is interposed between a heat transfer body and a busbar to seal therebetween, thereby efficiently transferring and dissipating heat generated from the busbar to the heat transfer body and a cooling pipe through thermal conduction.

A cooling module and a battery disconnect device including the same according to one aspect of the present disclosure can be configured such that a heat dissipation body in contact with a busbar is made of a thermal conductive rubber, a thermal conductive pad or a thermal conductive gel having a high thermal conductivity and a predetermined insulating property, thereby effectively dissipating heat of the busbar while blocking electrical connection between a plurality of busbars in contact therewith.

A cooling module and a battery disconnect device including the same according to one aspect of the present disclosure can be configured such that a cooling pipe through which a cooling fluid flows is fluidly connected to an outside of the cooling module and the battery disconnect device including the same, thereby preventing the cooling fluid from being lost to other elements of the cooling module and the battery disconnect device including the same, and also being insulated from a battery voltage.

A cooling module and a battery disconnect device including the same according to one aspect of the present disclosure can be configured such that a heat dissipation body is interposed between a heat transfer body and a busbar to increase a heat transfer rate so as to allow the cooling module to be arranged compactly, thereby being applied to various sizes of electrical devices.

The effects of the present disclosure are not limited to the foregoing effects, and effects not mentioned herein will be clearly understood by those skilled in the art to which the present disclosure pertains from this specification and the accompanying drawings.

### Brief Description of Drawings

FIG. 1 is a perspective view of a battery disconnect device according to one embodiment of the present disclosure when viewed from above.
FIG. 2 is an exploded perspective view of a battery disconnect device according to one embodiment of the present disclosure when viewed from above.
FIG. 3 is a cross-sectional view taken along cutting line I-I in FIG. 1.
FIGS. 4 and 5 are perspective views of a cooling module according to one embodiment of the present disclosure when viewed from different angles.
FIGS. 6 and 7 are exploded perspective views of a cooling module according to one embodiment of the present disclosure when viewed from different angles.
FIG. 8 is a perspective view of a battery disconnect device according to another embodiment of the present disclosure when viewed from above.
FIG. 9 is a cross-sectional view taken along cutting line II-II in FIG. 8.
FIG. 10 is a perspective view of a cooling module according to another embodiment of the present disclosure when viewed from below.
FIGS. 11 and 12 are exploded perspective views of a cooling module according to another embodiment of the present disclosure when viewed from different angles.

### Mode for the Invention

Words and terms used in this specification and claims are not interpreted as limited to their ordinary or dictionary meanings, and should be interpreted as meanings and concepts consistent with the technical concept of the present disclosure in accordance with the principle by which the inventor can define terms and concepts in order to explain his or her invention in the best way.

In this specification, the terms "include" or "have" should be understood that they are intended to describe the presence of a feature, a number, a step, an operation, an element, a component or a combination thereof disclosed in the specification, and the presence or additional possibility of one or more other features, numbers, steps, operations, elements, components or combinations thereof are not excluded in advance.

When an element is said to be "in front of," "behind," "above," or "below" another element, it includes not only being placed "in front of," "behind," "above," or "below" the other element in direct contact therewith, but also when there is still another element placed therebetween unless otherwise specified. In addition, when an element is "connected" to another element, it includes not only being directly connected to each other but also indirectly connected to each other unless otherwise specified.

In this specification, when one component seals between another component and still another component, it means that the one component fills therebetween so as to allow heat exchange between the other components to be performed mostly through thermal conduction of the one component. As an example, the one component can have a predetermined elasticity or a predetermined fluidity, thereby being deformed in form to fill therebetween.

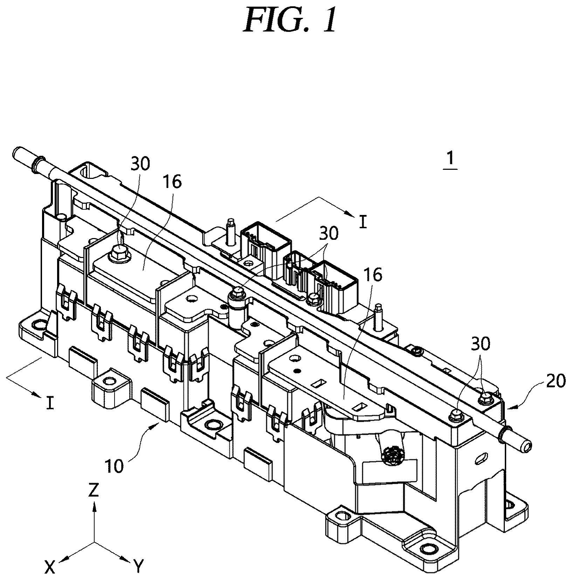

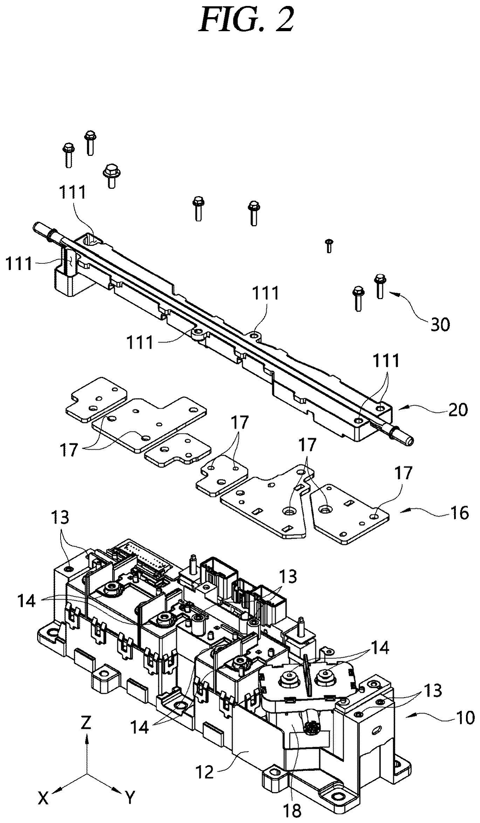

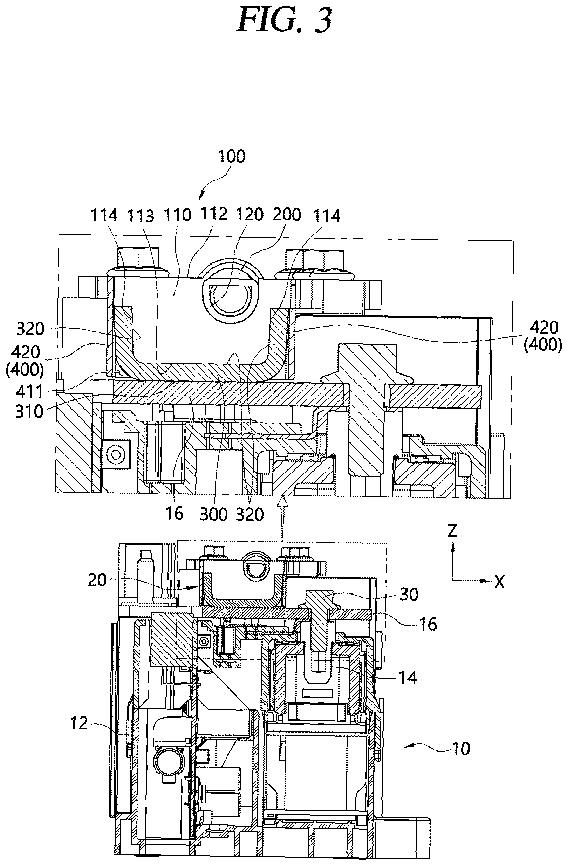

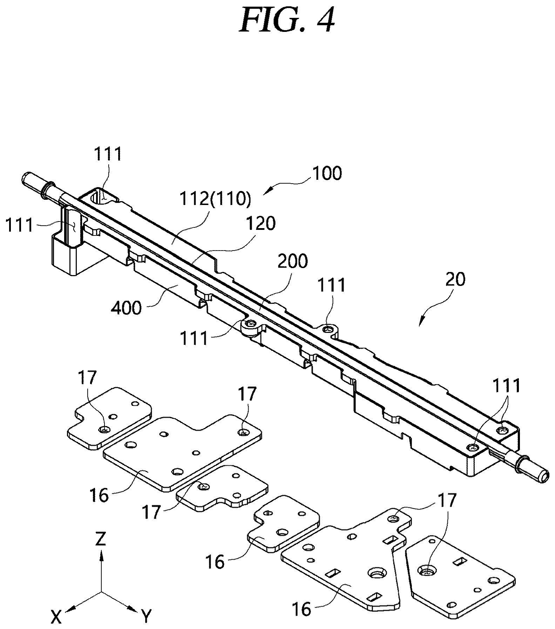

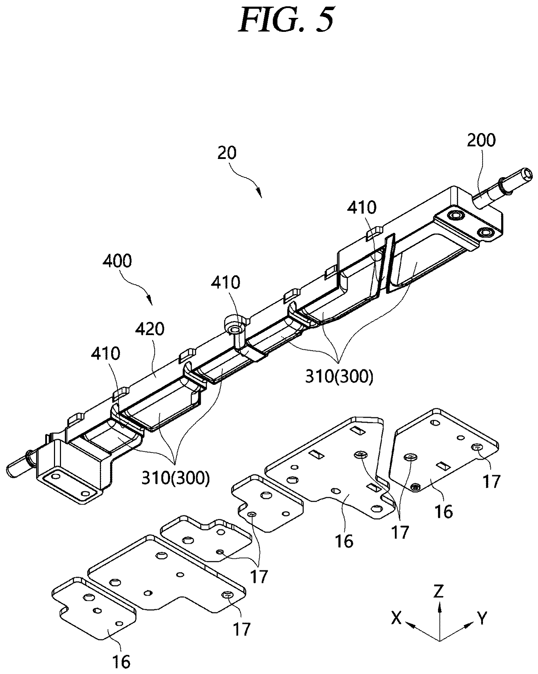

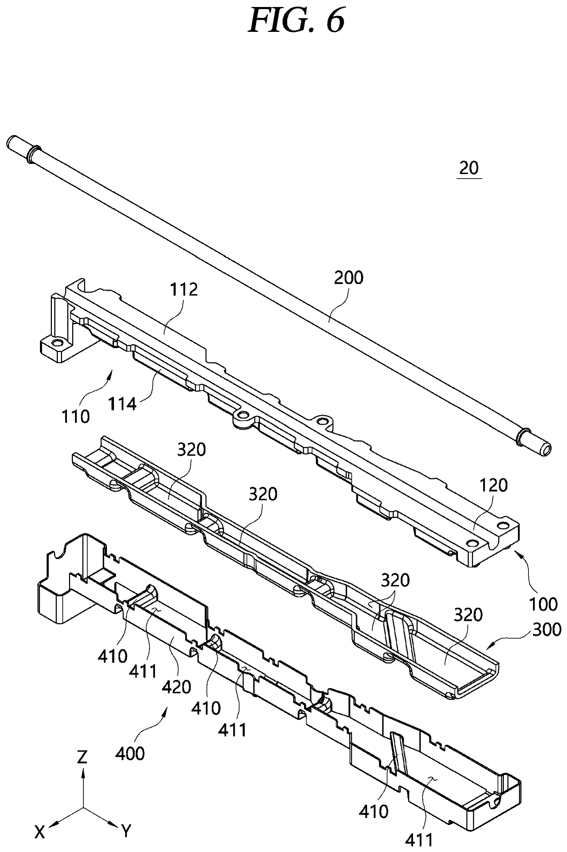

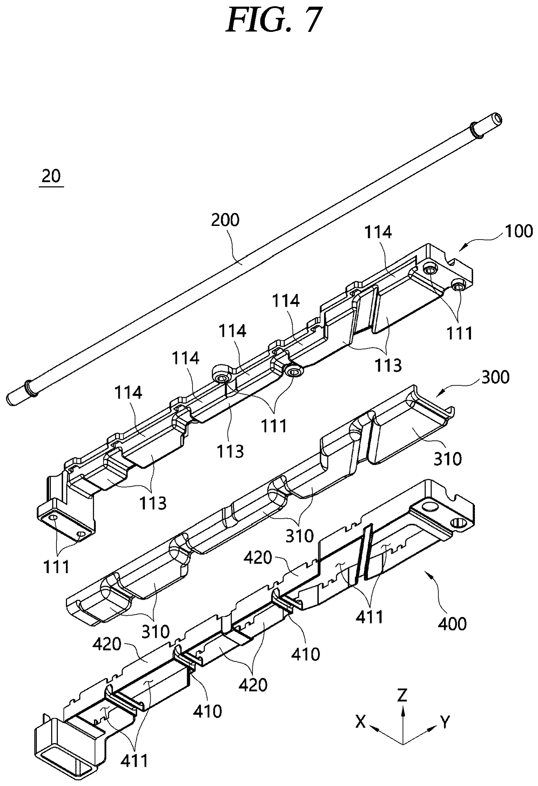

FIG. 1 is a perspective view of a battery disconnect device according to one embodiment of the present disclosure when viewed from above. FIG. 2 is an exploded perspective view of a battery disconnect device according to one embodiment of the present disclosure when viewed from above. FIG. 3 is a cross-sectional view taken along cutting line I-I in FIG. 1. FIGS. 4 and 5 are perspective views of a cooling module according to one embodiment of the present disclosure when viewed from different angles. FIGS. 6 and 7 are exploded perspective views of a cooling module according to one embodiment of the present disclosure when viewed from different angles.

Referring to FIG. 1, a battery disconnect device 1 according to one embodiment of the present disclosure is disclosed. The battery disconnect device 1 according to this embodiment is a device for blocking, when an overcurrent flows through an electric circuit to which a battery and a load are connected, electrical connection in the electric circuit, thereby preventing damage to the battery and other components due to the overcurrent.

The battery disconnect device 1 can be provided in any form capable of allowing or blocking electrical connection between a battery (not shown) and a load. As an example, the battery disconnect device 1 can be provided as a battery disconnect unit (BDU).

The battery disconnect device 1 according to this embodiment can be provided in any vehicle having a battery (not shown), such as an EV, HEV, plug-in hybrid electric vehicle (PHEV), or HV. Alternatively, the battery disconnect device 1 can be provided in any power device having a battery, such as an energy storage system (ESS).

Referring to FIGS. 1 to 3, the battery disconnect device 1 according to one embodiment of the present disclosure can include a disconnect module 10 and a cooling module 20. In this embodiment, the disconnect module 10 is configured to allow or block electrical connection in the aforementioned electric circuit.

According to one embodiment of the present disclosure, the disconnect module 10 can include a housing 12. The housing 12 is configured to provide a base on which other components of the battery disconnect device 1 are accommodated or installed.

In this embodiment, the housing 12 can be provided as a structure in a box shape having a predetermined space thereinside. Furthermore, the housing 12 can be made of a material such as plastic having a predetermined rigidity. In this case, the housing 12 can include a material having a predetermined insulating property to secure insulation performance for the inside and outside.

Meanwhile, in this embodiment, the housing 12 has a body shape, but is not limited thereto, and the shape of the housing 12 can be appropriately deformed as needed. For example, the housing 12 can be configured to have a portion open or curved to fit a form of a space in which the battery disconnect device 1 is placed or shapes of other elements of the battery disconnect device 1.

Referring to FIGS. 1 to 3, the disconnect module 10 of a battery disconnect device 1 according to one embodiment of the present disclosure can include a plurality of contactors 14 and busbars 16.

In this embodiment, a plurality of contactors 14 and busbars 16 can be coupled and electrically connected to one another in a predetermined manner, so as to electrically connect an external battery, a fuse 18 to be described later and other components provided in the vehicle thereto. To this end, the contactors 14 and busbars 16 can be made of a conductive material.

Meanwhile, in this embodiment, the contactor 14 can be provided as a member having a hole into which a coupling member 30 to be described later can be fastened so as to be coupled to another component, but a shape thereof is not particularly limited as long as it can be configured to be electrically connected to the other component.

According to this embodiment, the plurality of contactors 14 can be arranged in a predetermined space in a predetermined manner. For example, the plurality of contactors 14 can be arranged in a row inside the aforementioned housing 12. The manner or position in which the plurality of contactors 14 are placed can be modified as needed.

Referring to FIGS. 1 to 4, the busbar 16 can be configured to be electrically connected to the contactor 14 and an external battery or other devices. In this case, heat can be generated in the busbar 16 as a current flows. Excessive heat generated from the busbar 16 can cause fire, shorten the life of components due to deterioration, or reduce an electrical connection function of the battery disconnect device 1 or a current blocking function due to an overcurrent. In order to prevent this, the busbar 16 can be cooled.

In this embodiment, the busbar 16 can be provided as a flat-shaped member installed in the housing 12. Accordingly, the busbar 16 can be in contact with the outside air or the cooling module 20 to be described later over a large area, and thus can be cooled more effectively.

Furthermore, in this embodiment, the busbar 16 can be coupled to an upper surface of the housing so as to allow one side thereof to be exposed to the outside. However, the position at which the busbar 16 is placed in the housing 12 is not particularly limited as long as it can be cooled by the cooling module 20 to be described later.

Meanwhile, in this embodiment, at least one busbar 16 can be provided. In the shown embodiment, the busbars 16 consist of a total of six to be arranged in a row along a Y-axis direction. The arrangement of the plurality of multiple busbars 16 can be appropriately modified depending on their relative positions with respect to the contactor 14 and other devices.

In this case, the six busbars 16 can be made of flat-shaped members each having a different shape. The shape of each of the busbars 16 can be appropriately modified, such as by bending a portion thereof to fit the portion where it is installed in the housing 12.

Meanwhile, in this embodiment, the busbar 16 is provided as a member having a flat shape. The shape of the busbar 16 according to this embodiment is not limited to that shown, and the shape of the busbar 16 is not particularly limited as long as it can be in direct or indirect contact with the cooling module 20 to allow heat exchange.

Referring to FIG. 2, in this embodiment, the busbar 16 can include at least one busbar side coupling member hole 17. The busbar side coupling member hole 17 is configured such that the coupling member 30 to be described later can be passed therethrough and coupled thereto. This will be described later together with the coupling member 30.

Referring again to FIG. 2, the disconnect module 10 of the battery disconnect device 1 according to one embodiment of the present disclosure can include a fuse 18. In this embodiment, the fuse 18 is configured to prevent damage or an accident to other elements due to an overcurrent.

In this embodiment, the fuse 18 can be configured with a device that operates to break when an overcurrent is applied thereto. Furthermore, some of the plurality of contactors 14 can be coupled to the fuse 18 as shown in the lower right of FIG. 2. Furthermore, the contactor 14 coupled to the fuse 18 can be electrically connected to the busbar 16.

Accordingly, the fuse 18 can detect whether an overcurrent flows in the busbar 16, and block electrical connection when the overcurrent flows. A process in which the fuse 18 blocks electrical connection is a well-known technology, and thus a detailed description thereof will be omitted.

Hereinafter, the cooling module 20 of the battery disconnect device 1 according to one embodiment of the present disclosure will be described. As described above, the cooling module 20 according to one embodiment of the present disclosure can be configured to cool heat generated from the busbar 16 of the disconnect module 10.

Referring to FIGS. 4 to 7, the cooling module 20 according to one embodiment of the present disclosure can include a heat transfer body 100, a cooling pipe 200, and a heat dissipation body 300. The heat transfer body 100 is a member that receives heat from the busbar 16 via the heat dissipation body 300 to transfers the heat to the cooling pipe 200 to be described later or dissipate it to the outside. To this end, the heat transfer body 100 can be made of a material having a high thermal conductivity, for example, aluminum or an alloy material including the same.

In this embodiment, the heat transfer body 100 can include a heat transfer body part 110. The heat transfer body part 110 can be provided as a block-shaped member extending in one direction. In this case, a direction in which the heat transfer body part 110 extends can be parallel to a direction in which the plurality of busbars 16 are arranged. In the shown embodiment, the heat transfer body part 110 extends along a Y-axis direction, which is a direction in which the six busbars 16 are arranged.

Accordingly, at least a portion of the heat transfer body part 110 can be adjacent to any one of the plurality of busbars 16 so as to effectively absorb heat generated from the busbar 16.

According to this embodiment, the heat transfer body part 110 can include an upper surface 112, a lower surface 113, and a side surface 114. The upper surface 112 can be defined as a surface facing away from the busbar 16 so as to allow heat transferred to the heat transfer body part 110 to be dissipated to the outside.

In this embodiment, the upper surface 112 is a surface facing a positive direction of the Z-axis. This upper surface 112 can be exposed so as to allow heat to be directly dissipated to the outside. In this case, the upper surface 112 can extend in a Y-axis direction parallel to an extension direction of the heat transfer body part 110. Accordingly, the upper surface 112 from which heat generated from the busbar 16 is dissipated and the busbar 16 can be arranged as close as possible to each other so as to allow heat to be dissipated efficiently.

Next, referring to FIG. 7, in this embodiment, the lower surface 113 of the heat transfer body part 110 can be defined as a surface facing the busbar 16 so as to allow heat to be transferred to the heat transfer body part 110.

In the shown embodiment, the lower surface 113 is a surface facing a negative direction of the Z-axis. This lower surface 113 can be configured to be in contact with a heat dissipation surface 320 of the heat dissipation body 300 to be described later and receive heat.

In this case, the lower surface 113 of the heat transfer body part 110 can extend in a Y-axis direction parallel to an extension direction of the heat transfer body part 110. Furthermore, according to this embodiment, a portion of the lower surface 113 can be concavely recessed or convexly protruded.

For example, a portion of the lower surface 113 can be protruded in a negative direction of the Z-axis so as to be closer to the busbar 16. Furthermore, the other portion of the lower surface 113 can be concavely recessed to correspond to the shape of a bottom part 410 of a heat dissipation body frame 400 to be described later.

Next, in this embodiment, the side surface 114 of the heat transfer body part 110 can be defined as a surface surrounding a side part of the heat transfer body part 110 between the upper surface 112 and the lower surface 113. In the shown embodiment, both side surfaces of the side surface 114 facing the X-axis are configured to be in contact with the heat dissipation surface 320 of the heat dissipation body 300 to be described later together with the lower surface 113 and receive heat.

In this way, in this embodiment, the heat transfer body part 110 is configured to be in surface contact with the heat dissipation body 300 through the lower surface 113 and the side surface 114 so as to allow a heat transfer area between the two components to be secured as wide as possible.

Meanwhile, the heat transfer body part 110 according to this embodiment and the upper surface 112, lower surface 113 and side surface 114 included therein can be appropriately modified in consideration of a form of a space in which the heat transfer body part 110 is placed and a relative coupling relationship with other components. For example, the heat transfer body part 110 can have a portion that is concavely recessed or convexly protruded.

Referring to FIGS. 1 to 4, the heat transfer body part 110 of the cooling module 20 according to this embodiment can have a heat transfer body side coupling member hole 111 arranged therein. The heat transfer body side coupling member hole 111 configured to be coupled to the coupling member to be described later can be provided at a position corresponding to a housing side coupling member hole 13 described above. This will be described later together with the coupling member 30.

Referring again to FIGS. 4 to 7, the heat transfer body 100 according to one embodiment of the present disclosure can include a pipe coupling part 120. The pipe coupling part 120 is a portion to which the cooling pipe 200 to be described later is coupled.

The pipe coupling part 120 according to this embodiment can be provided in a form of a groove (hereinafter, referred to as a pipe coupling groove) arranged to be recessed into the upper surface 112 of the heat transfer body part 110 so as to allow the cooling pipe 200 to be fitted therein. The pipe coupling groove can be provided along an extension direction of the cooling pipe 200.

In this case, as shown in FIG. 3, a depth of the pipe coupling groove can be configured to be deeper than a radius of the cooling pipe 200. In other words, when viewed in an extension direction, a portion of the cooling pipe 200 that enters the pipe coupling groove can be larger than a portion exposed on the upper surface 112 of the heat transfer body part 110. Accordingly, an area where the cooling pipe 200 and the pipe coupling part 120 come into contact and exchange heat can be further increased.

Meanwhile, a form of the pipe coupling part 120 is not particularly limited as long as the heat transfer body part 110 and the cooling pipe 200 can be coupled to each other while mutually transferring heat. For example, when the cooling pipe 200 is coupled to pass through an inside of the heat transfer body part 110, the pipe coupling part 120 can be provided in a form of a hole through which the cooling pipe 200 passes.

Referring to FIGS. 3, 6 and 7, the heat transfer body 100 of the cooling module 20 according to one embodiment of the present disclosure can include a circumference part 130. In this embodiment, the circumference part 130 is configured to prevent the heat dissipation body 300 to be described later from coming out between the heat transfer body 100 and the heat dissipation body frame 400.

In addition, the circumference part 130 can be coupled to a side wall part 420 of the heat dissipation body frame 400 in a shape-fitting manner to perform a function of supplementing the assemblability between the heat transfer body 100 and the heat dissipation body frame 400.

In this embodiment, the circumference part 130 can be provided along the circumference at a side part of the upper surface 112 of the heat transfer body part 110 in an X-axis direction. The circumference part 130 can be arranged to protrude outward from the heat transfer body part 110. Accordingly, the heat dissipation body 300 between the side surface 114 of the heat transfer body part 110 and the heat dissipation body frame 400 can be prevented from coming out.

Meanwhile, the circumference part 130 can not be provided depending on the characteristics of the heat dissipation body 300 or the position where the heat dissipation body 300 is interposed. As an example, when the heat dissipation body 300 is made of a material (e.g., rubber, etc.) that elastically adheres to the heat transfer body 100, the heat dissipation body 300 does not flow outward, and thus the circumference part 130 cannot be separately provided.

As another example, when the heat dissipation body 300 is not interposed between the side surface 114 of the heat transfer body part 110 and the heat dissipation body frame 400, the heat dissipation body 300 is less likely to pass through the side surface 114 and escape to an upper side of the upper surface 112, and thus the circumference part 130 cannot be separately provided.

Referring to FIGS. 3 to 5, the cooling pipe 200 can be coupled to the pipe coupling part 120 of the cooling module 20 according to one embodiment of the present disclosure as described above. The cooling pipe 200 can be provided in a form of a pipe through which a predetermined cooling fluid can flow. The cooling fluid is a fluid that absorbs heat generated from the busbar 16 to dissipate it to the outside. As an example, the cooling fluid can be water, but is not limited thereto.

In this embodiment, the cooling pipe 200 can be formed of a water resistance material. As an example, the cooling pipe 200 can be made of aluminum or an alloy material including the same. This is to prevent a situation in which the cooling pipe 200 is corroded by a cooling fluid in an embodiment in which the cooling fluid includes water.

According to this embodiment, the cooling pipe 200 can extend in one direction. In this case, the cooling pipe 200 can extend in a direction parallel to a direction in which the plurality of busbars 16 are arranged. In the shown embodiment, the cooling pipe 200 extends in a Y-axis direction, which is a direction in which the six busbars 16 are arranged.

Accordingly, at least a portion of the cooling pipe 200 can be adjacent to any one of the plurality of busbars 16 so as to absorb heat generated from the busbar 16 as effectively as possible.

Of course, a portion of the cooling pipe 200 can be bent depending on an arrangement method of the busbars 16. Moreover, the cooling pipe 200 can be configured to be bent in a zigzag shape on one surface of the busbar 16 so as to exchange heat with each of the busbars 16 over as much area as possible.

Meanwhile, openings that can communicate with the outside can be provided at both ends of the cooling pipe 200 in an extension direction. In this case, each end of the cooling pipe 200 can extend to an outside of the disconnect module 10, and thus the opening can be positioned outside the disconnect module 10.

An inside of the cooling pipe 200 can be communicated with the outside through each of the ends. That is, the cooling fluid can be introduced into the cooling pipe 200 through either one of the ends, and discharged from the cooling pipe 200 through the other end. Through this, the flow of the cooling fluid can be controlled to absorb the heat of the busbar 16 and dissipate it to the outside.

In this way, the cooling module 20 according to this embodiment and the battery disconnect device 1 including the same can be configured such that a cooling fluid flowing through the cooling pipe 200 is fluidly connected to an outside of the cooling module 20 and the battery disconnect device 1 including the same, and thus the cooling fluid can be prevented from being lost to the cooling module 20 or other components of the battery disconnect device 1.

Referring again to FIGS. 3, 6 and 7, the heat dissipation body 300 can be interposed between the heat transfer body 100 and the busbar 16 of the cooling module 20 according to one embodiment of the present disclosure. As described above, the heat dissipation body 300 is configured to mediate heat transfer between the busbar 16 and the heat transfer body 100 through thermal conduction.

In this embodiment, the heat dissipation body 300 can be configured to entirely surround the lower surface 113 and the side surface 114 of the aforementioned heat transfer body part 110. In other words, the heat dissipation body 300 can be configured with a thermal conductive layer having a predetermined thickness on the lower surface 113 and the side surface 114 of the heat transfer body part 110.

Accordingly, the heat dissipation body 300 can be in contact with the heat transfer body 100 and the busbar 16 over a large area and can transfer heat through thermal conduction. Hereinafter, a surface where the heat dissipation body 300 and the busbar 16 come into contact with each other is referred to as a heat absorption surface 310, and a surface where the heat dissipation body 300 and the heat transfer body 100 come into contact with each other is referred to as a heat dissipation surface 320.

In this case, the heat dissipation body 300 of the cooling module 20 according to this embodiment can be configured to seal between the busbar 16 and the heat transfer body 100 for efficient heat exchange between the busbar 16 and the heat transfer body 100.

This is because, when an air layer having a low thermal conductivity is interposed between the busbar 16 and the heat transfer body 100, a heat exchange efficiency between the busbar 16 and the heat transfer body 100 can be reduced due to the air layer.

To this end, the heat dissipation body 300 can be made of a material having a predetermined elasticity so as to seal between the heat transfer body 100 and the busbar 16. For example, the heat dissipation body 300 can include at least one of a thermal conductive rubber, a thermal conductive pad, and a thermal conductive gel, but is not limited thereto.

The heat dissipation body 300 having an elasticity can be elastically deformed to fill an empty space between the busbar 16 and the heat transfer body 100 when the busbar 16 and the heat transfer body 100 are brought closer and coupled to each other during a manufacturing process of the cooling module 20 or the battery disconnect device 1.

Alternatively, the heat dissipation body 300 can be made of a material having a predetermined fluidity that can be deformed and flowed to fit a shape of a space accommodated at least during installation so as to seal between the heat transfer body 100 and the busbar 16. For example, the heat dissipation body 300 can include at least one of a thermal conductive gel, a thermal conductive pad, and a thermal conductive rubber, but is not limited thereto.

The heat dissipation body 300 having a fluidity can flow to fill an empty space between the busbar 16 and the heat transfer body 100 when the busbar 16 and the heat transfer body 100 are brought closer and coupled to each other during a manufacturing process of the cooling module 20 or the battery disconnect device 1.

Meanwhile, the heat dissipation body 300 can be made of a material having a predetermined thermal conductivity. As an example, the heat dissipation body 300 can be made of a material having a thermal conductivity above 1 W/mK. However, the thermal conductivity of a material constituting the heat dissipation body 300 is not particularly limited, and in any case, it is sufficient if the thermal conductivity can be improved compared to conventional rubber, gel, or pad.

In this case, the heat dissipation body 300 can be made of a material having a predetermined insulating property. This is to prevent the plurality of busbars 16 and the plurality of contactors 14 from being electrically connected to one another through the heat dissipation body 300.

Meanwhile, referring again to FIGS. 3 to 7, the cooling module 20 according to one embodiment of the present disclosure can include the heat dissipation body frame 400. In this embodiment, the heat dissipation body frame 400 is a frame that covers an outer surface of the heat dissipation body 300 to protect it from external contamination or impact.

In addition to the function, the heat dissipation body frame 400 can perform various functions together. For example, the heat dissipation body frame 400 can fix relative positions among the heat dissipation body 300, the heat transfer body 100, and the busbar 16. Alternatively, the heat dissipation body frame 400 can fix and maintain an overall form of the heat dissipation body 300.

To this end, the heat dissipation body frame 400 can be made of plastic or the like having a predetermined rigidity. In this case, the heat dissipation body frame 400 can be made of a material having an insulating property so as to secure insulation performance between the busbars 16.

For example, the heat dissipation body frame 400 can be formed by mixing a material that can provide electrical insulation and thermal conductivity to a synthetic resin such as poly phenylene sulfide (PPS), polycarbonate (PC), polyamide (PA), polybutylene terephthalate (PBT), or liquid crystal polymer (LCP).

As an example, the insulating material can include ceramic series fillers such as boron nitride (BN), aluminum nitride (AIN), silicon carbide (SiC), magnesium oxide (MgO), and aluminum oxide (Al₂O₃).

The heat dissipation body frame 400 of the cooling module 20 according to one embodiment of the present disclosure can include a bottom part 410. In this embodiment, the bottom part 410 can be provided as a plate-shaped member for covering a lower surface of an outer surface of the heat dissipation body 300 facing in a negative direction of the Z-axis.

The bottom part 410 can extend parallel to an extension direction of the heat transfer body part 110 so as to cover an entire lower surface of the heat dissipation body 300. In the shown embodiment, the bottom part 410 extends in a Y-axis direction.

In this case, the bottom part 410 according to this embodiment can include a contact hole 411. The contact hole 411 can expose the heat absorption surface 310 of the heat dissipation body 300 to an outside of the heat dissipation body frame 400.

In other words, a portion of the heat dissipation body 300 can protrude outwardly to pass through the contact hole 411 of the bottom part 410, and the aforementioned heat absorption surface 310 can be provided on the protruding portion. Accordingly, the heat absorption surface 310 can be in direct surface contact with the busbar 16.

In this case, the contact hole 411 of the bottom part 410 can be provided in plurality to correspond to a number of the plurality of busbars 16. Furthermore, each contact hole 411 can have a shape corresponding to the shape of the corresponding busbar 16.

Through this, the heat absorption surface 310 of the heat dissipation body 300 can come into surface contact with the busbar 16 over as wide an area as possible, and heat generated from the busbar 16 can be effectively transferred to the heat dissipation body 300 and the heat transfer body 100.

Again, referring to FIGS. 3 to 7, the heat dissipation body frame 400 of the cooling module 20 according to one embodiment of the present disclosure can include a side wall part 420. The side wall part 420 can be provided as a plate-shaped member covering a side surface of the heat dissipation body 300. In other words, the side wall part 420 can be provided as a plate-shaped member that entirely surrounds the side surface 114 of the heat transfer body part 110.

In this case, a lower part of the side wall part 420 can be connected to the bottom part 410. Furthermore, an upper part of the side wall part 420 can be coupled to the circumference part 130 of the heat transfer body 100 in a shape-fitting manner. Accordingly, the heat dissipation body frame 400 according to this embodiment can cover and protect an entire outer surface of the heat dissipation body 300. In particular, when the heat dissipation body 300 has a predetermined fluidity, an overall form of the heat dissipation body 300 can be maintained and the heat dissipation body 300 can be prevented from flowing outward.

In this way, the heat dissipation body 300 of the cooling module 20 according to one embodiment of the present disclosure can seal between the heat transfer body 100 and the busbar 16 to transfer the heat of the busbar 16 to the heat transfer body 100 through thermal conduction. Furthermore, the heat transferred to the heat transfer body 100 can be effectively dissipated to the cooling pipe 200 and the outside air. Accordingly, the busbar 16 can be cooled efficiently.

In addition, since the cooling module 20 according to this embodiment is configured to cool the busbar 16 using a cooling fluid having excellent heat transfer performance, an amount of thermal energy that can be cooled per unit volume of the cooling module can be increased, and thus the cooling module can be provided more compactly than other types of cooling modules that do not use a cooling fluid. Accordingly, it can be applied to various types of electrical devices, and can increase the utilization of an internal space of the electrical device.

Meanwhile, referring again to FIGS. 1 to 3, the battery disconnect device 1 according to one embodiment of the present disclosure can include the coupling member 30. The coupling member 30 is configured to couple the disconnect module 10 and the cooling module 20 to each other.

According to one embodiment of the present disclosure, the coupling member 30 is provided as a screw-shaped member and can be provided in plurality. Some of the plurality of coupling members 30 can be passed through and connected to the heat transfer body side coupling member hole 111 and the housing side coupling member hole 13 of the aforementioned heat transfer body 100 to couple the cooling module 20 and the housing 12 to each other.

Some of the other plurality of coupling members 30 can be passed through and coupled to the busbar side coupling member hole 17 of the busbar 16 and the housing side coupling member hole 13 to allow the busbar 16 and the housing 12 to be coupled to each other.

Alternatively, some of the other plurality of coupling members 30 can be coupled to the busbar side coupling member hole 17 of the busbar 16 and the contactor 14 to electrically connect the two components. To this end, the coupling member 30 can be made of a metal or the like having a predetermined conductivity.

Meanwhile, in this embodiment, the coupling member 30 is provided as a screw or bolt-shaped member, but the coupling member 30 can be made in various components that can connect the disconnect module 10 and the cooling module 20 to each other. Moreover, when the disconnect module 10 and the cooling module 20 can be coupled by themselves through shape fitting, or the like, the coupling member 30 cannot be separately provided.

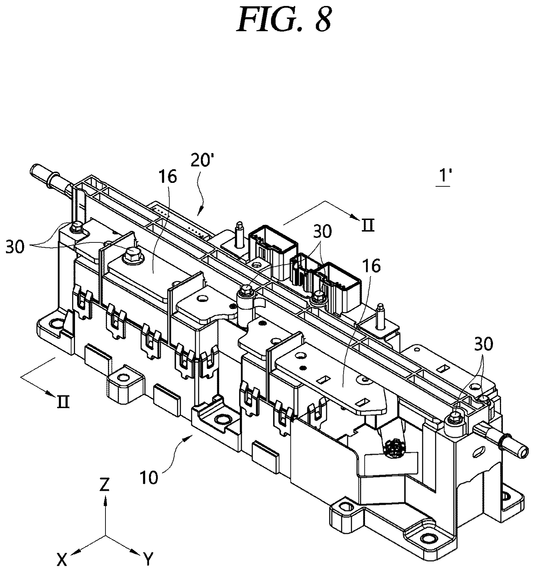

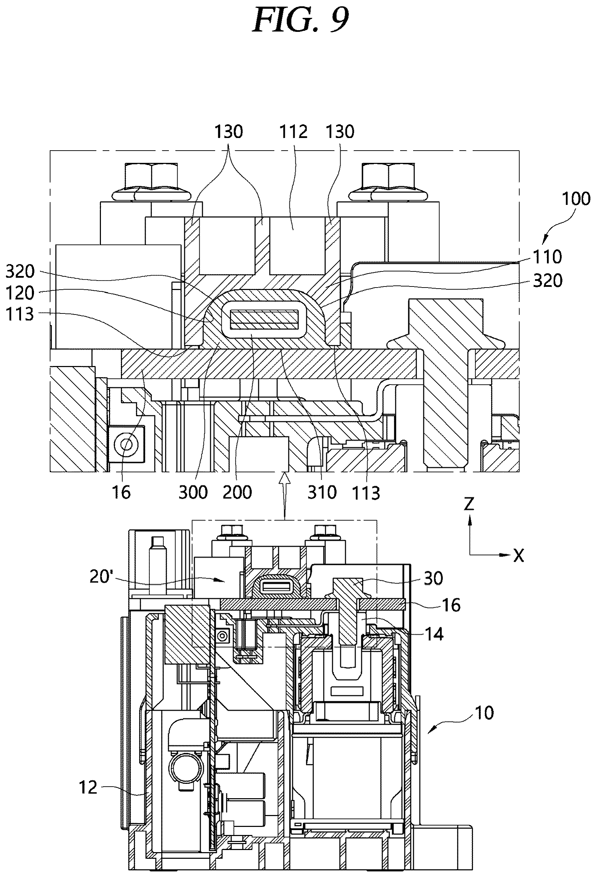

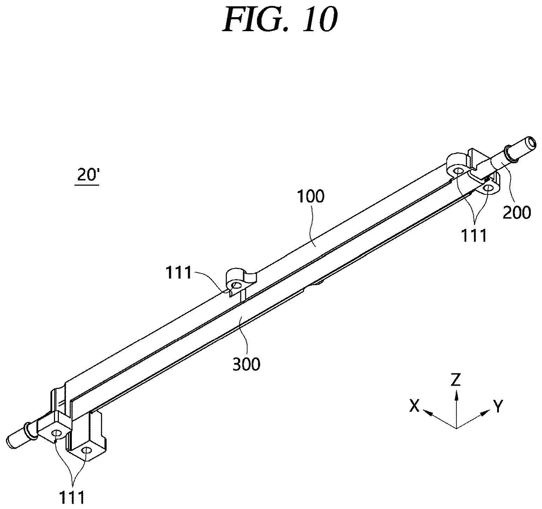

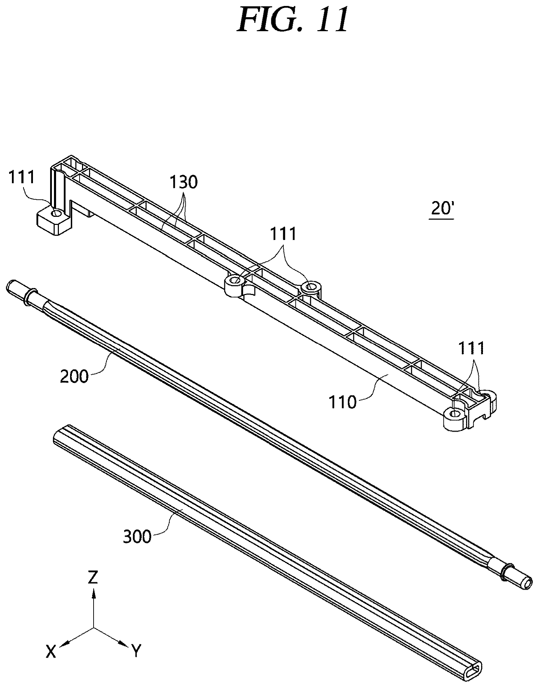

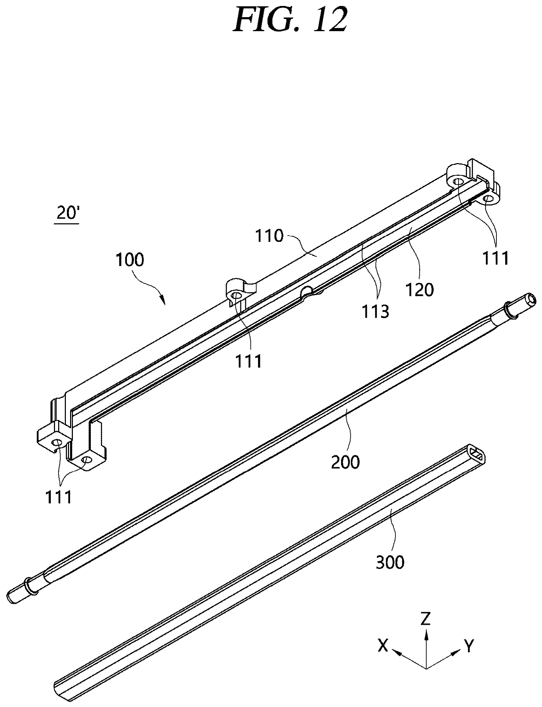

Hereinafter, a battery disconnect device according to another embodiment of the present disclosure will be described with different drawings. FIG. 8 is a perspective view of a battery disconnect device according to one embodiment of the present disclosure when viewed from above. FIG. 9 is a cross-sectional view taken along cutting line II-II in FIG. 8. FIG. 10 is a perspective view of a cooling module according to another embodiment of the present disclosure when viewed from below. FIGS. 11 and 12 are exploded perspective views of a cooling module according to another embodiment of the present disclosure when viewed from different angles.

Referring to FIG. 8, a battery disconnect device 1' according to another embodiment of the present disclosure is disclosed. The battery disconnect device 1' according to this embodiment can include a disconnect module 10, a cooling module 20', and a coupling member 30.

In this case, the disconnect module 10 and the coupling member 30 of the battery disconnect device 1' according to this embodiment can be configured in the same manner as the disconnect module and the coupling member of the battery disconnect device according to one embodiment of the present disclosure described with reference to FIGS. 1 to 7, and therefore, a detailed description thereof will be omitted, and the cooling module 20' according to this embodiment will be specifically described.

Referring to FIGS. 8 to 12, the cooling module 20' according to another embodiment of the present disclosure can include a heat transfer body 100, a cooling pipe 200, and a heat dissipation body 300. In this embodiment, the heat transfer body 100 is configured to dissipate heat generated from the busbar 16 to the outside and protect the heat dissipation body 300 to be described later from external contamination or impact.

In this embodiment, the heat transfer body 100 can include a heat transfer body part 110 and a pipe coupling part 120. The heat transfer body part 110 can be provided as a block-shaped member extending in one direction.

Furthermore, a lower surface of the heat transfer body part 110 can be placed on an upper surface of the busbar 16. In this embodiment, the lower surface of the heat transfer body part 110 is in surface contact with the upper surface of the busbar 16. In this case, the heat transfer body part 110 can be made of a material having a predetermined heat transfer rate so as to allow heat to be effectively dissipated. For example, the heat transfer body part 110 can be made of aluminum or an alloy material including the same.

According to this embodiment, the heat transfer body part 110 can extend in a Y-axis direction parallel to a direction in which the plurality of busbars 16 are arranged. Accordingly, at least a portion of the heat transfer body part 110 can be arranged adjacent to any one of the plurality of busbars 16 so as to effectively absorb heat generated from the busbar 16 and dissipate it to the outside.

Of course, the shape of the heat transfer body part 110 can be appropriately modified in consideration of a space to be placed or a coupling relationship with other components. For example, the heat transfer body part 110 can have a portion that is concavely recessed or convexly protruded.

Referring to FIGS. 9 and 12, the pipe coupling part 120 can be provided on one surface of the heat transfer body part 110. Here, the one surface can be a lower surface facing the busbar 16. In this embodiment, the pipe coupling part 120 is a portion to which the cooling pipe 200 to be described later is coupled.

In this case, the pipe coupling part 120 according to this embodiment can be provided in a form of a groove (hereinafter, referred to as a pipe coupling groove) into which the cooling pipe 200 and the heat dissipation body 300 surrounding the same can be inserted as shown. Furthermore, the pipe coupling groove can be provided along an extension direction of the cooling pipe 200.

In this way, in this embodiment, a pipe coupling groove can be provided on a lower surface of the heat transfer body part 110 facing the busbar 16 so as to allow one side part of the heat dissipation body 300 surrounding the cooling pipe 200 to be in surface contact with the busbar 16, and the other side part surrounded by the heat transfer body part 110 not to be exposed to the outside.

Accordingly, the heat dissipation body 300 can be protected from external contamination and impact by the heat transfer body part 110. Alternatively, the heat dissipation body 300 can be fixed in position by the heat transfer body part 110 so as not to be separated from the cooling pipe 200. Alternatively, when the heat dissipation body 300 has a predetermined fluidity, an overall form of the heat dissipation body 300 can be fixed and maintained by the heat transfer body part 110.

Meanwhile, in this embodiment, the pipe coupling part 120 is provided in a groove shape, but the form of the pipe coupling part 120 is not particularly limited as long as the cooling pipe 200 can be coupled thereto. For example, when the cooling pipe 200 coupled to pass through an inside of the heat transfer body part 110, the pipe coupling part 120 can be provided in a form of a hole to which the cooling pipe 200 is coupled to pass therethrough.

Referring to FIGS. 9 and 11, the heat transfer body 100 of the cooling module 20' according to another embodiment of the present disclosure can include a heat dissipation fin 130. The heat dissipation fin 130 is configured to effectively dissipate the heat of the busbar 16 transferred to the heat transfer body part 110.

The heat dissipation fin 130 can be provided on an outer surface of the heat transfer body part 110 that is exposed to the outside. In the shown embodiment, the heat dissipation fin 130 is provided on an upper surface of the heat transfer body part 110.

The heat dissipation fin 130 can have a structure for effectively dissipating heat. To this end, the heat dissipation fin 130 can be configured to increase an area of the outer surface of the heat transfer body 100.

As shown, the heat dissipation fin 130 can be provided as a plurality of plate-shaped members having a thin thickness. Furthermore, some of the plurality of heat dissipation fins 130 can be arranged parallel to each other while being spaced apart in an X-axis direction, and the remaining some can be arranged in a Y-axis direction in a manner of intersecting them. A structure and arrangement of the heat dissipation fin 130 can be appropriately modified as needed.

Referring again to FIGS. 9 to 12, the cooling pipe 200 can be coupled to the pipe coupling part 120 of the heat transfer body 100 according to this embodiment. In this case, the cooling pipe 200 can be configured similarly to the cooling pipe 200 (shown in FIG. 1) according to the aforementioned embodiment.

In this case, referring to FIG. 9, the cooling pipe 200 according to this embodiment can have a square shape in a cross section perpendicular to an extension direction. Accordingly, an area of an outer surface of the cooling pipe 200 becomes larger compared to a volume thereof, so as to allow external heat to be efficiently transferred to the cooling fluid flowing through the cooling pipe 200.

In this case, a cross-section of the cooling pipe 200 can be configured such that a width in a direction parallel to one surface of the busbar 16 (i.e., a width in an X-axis direction) is greater than a width in a direction perpendicular or inclined to one surface of the busbar 16 (i.e., a width in a Z-axis direction). Accordingly, an area of a surface where the cooling pipe 200 and the busbar 16 face each other becomes larger, so as to allow the heat of the busbar 16 to be efficiently transferred to the cooling pipe 200.

Referring again to FIGS. 9 to 12, the heat dissipation body 300 of the cooling module 20' according to one embodiment of the present disclosure can be configured to surround an outer periphery of the cooling pipe 200 as described above. The heat dissipation body 300 can entirely surround a portion of the outer periphery of the cooling pipe 200 that is coupled to the pipe coupling part 120. In this case, the heat dissipation body 300 can be configured to seal between the heat transfer body 100 and the busbar 16.

More specifically, in this embodiment, the heat dissipation body 300 is configured to seal the pipe coupling groove. Through this, heat exchange between the busbar 16, the heat transfer body 100 and the cooling pipe 200 can be efficiently achieved.

This is because, when an air layer or the like with a low thermal conductivity is interposed between the busbar 16 and the heat transfer body 100, a heat transfer rate between the two components can be reduced due to the air layer.

To this end, the heat dissipation body 300 can be made of a material having a predetermined elasticity so as to seal between the heat transfer body 100 and the busbar 16. For example, the heat dissipation body 300 can be made of a thermal conductive rubber or a thermal conductive pad, but is not limited thereto.

Alternatively, the heat dissipation body 300 can be made of a material having a predetermined fluidity that can be deformed and flowed to fit a shape between the heat transfer body 100 and the busbar 16 at least during installation so as to seal therebetween. For example, the heat dissipation body 300 can be made of a thermal conductive gel or a thermal conductive pad, but is not limited thereto.

Meanwhile, the heat dissipation body 300 can be made of a material having a predetermined thermal conductivity. As an example, the heat dissipation body 300 can be made of a material having a thermal conductivity above 1 W/mK. However, the thermal conductivity of a material constituting the heat dissipation body 300 is not particularly limited, and in any case, it is sufficient if the thermal conductivity can be improved compared to conventional rubber, gel, or pad.

In this case, the heat dissipation body 300 can be made of a material having a predetermined insulating property. This is to prevent the plurality of busbars 16 and the plurality of contactors 14 from being electrically connected to one another through the heat dissipation body 300.

According to this embodiment, a heat absorption surface in surface contact with the busbar 16 can be provided on a lower side part of the heat dissipation body 300, and a heat dissipation surface in surface contact with an inner surface of a pipe coupling groove can be provided on upper and side parts of the heat dissipation body 300.

Accordingly, a portion of the heat transferred from the busbar 16 to the heat dissipation body 300 through the heat absorption surface can be transferred to the cooling pipe 200, and the remainder can be dissipated to the outside through the heat transfer body 100.

In addition, unlike the cooling module 20 according to the aforementioned embodiment, the cooling module 20' according to this embodiment cannot have a separate heat dissipation body frame, and thus the configuration of the cooling module can be configured more simply and compactly. Through this, the manufacturing cost of the cooling module can be reduced and space utilization can be increased.

Although one embodiment of the present disclosure has been described above, the concept of the present disclosure is not limited to the embodiment presented in this specification, and those skilled in the art who understand the concept of the present disclosure will be able to easily propose other embodiments by adding, changing, deleting, or supplementing elements within the scope of the same concept, but this will also be considered to fall within the concept of the present disclosure.
1 1': Battery disconnect device 10: Disconnect module
20 20': Cooling module 30: Coupling member
100: Heat transfer body 200: Cooling pipe
300: Heat dissipation body 400: Heat dissipation body frame

## Claims

1. A cooling module comprising:
a heat transfer body that can be coupled to an external busbar so as to receive heat generated from the busbar;
a cooling pipe coupled to the heat transfer body to allow a cooling fluid to flow therein so as to receive the heat and dissipate it to the outside; and
a heat dissipation body having a heat absorption surface that can be in contact with the busbar to receive the heat from the busbar on one side thereof, and having a heat dissipation surface that is in contact with the heat transfer body to transfer the received heat to the heat transfer body on the other side thereof,
wherein the heat dissipation body is made of a material having a predetermined elasticity or a predetermined fluidity that can be deformed to fit a shape of a space accommodated at least during installation, and is interposed between the heat transfer body and the busbar.

2. The cooling module of claim 1, wherein the heat dissipation body is configured to seal at least one region between the heat transfer body and the busbar.

3. The cooling module of claim 1, wherein the heat transfer body comprises:
a heat transfer body part that can be coupled to the busbar; and
a pipe coupling part provided in the heat transfer body part to which the cooling pipe is joined.

4. The cooling module of claim 3, wherein the heat transfer body part comprises an outer surface exposed to the outside, and
wherein the pipe coupling part is provided on the outer surface of the heat transfer body part so as to allow at least a portion of the cooling pipe to be exposed to the outside.

5. The cooling module of claim 4, wherein the pipe coupling part comprises a pipe coupling groove arranged to be recessed on the outer surface to accommodate at least a portion of the cooling pipe and provided along an extension direction of the cooling pipe.

6. The cooling module of claim 5, wherein the cooling pipe is configured such that a depth of the pipe coupling groove is deeper than a radius of the cooling pipe.

7. The cooling module of claim 3, wherein the heat transfer body part extends along an extension direction of the cooling pipe.

8. The cooling module of claim 7, wherein the heat transfer body part comprises an upper surface, a lower surface, and a side surface provided along the extension direction of the cooling pipe, and
wherein the heat dissipation body is configured to entirely surround the lower surface and the side surface of the heat transfer body part.

9. The cooling module of claim 7, further comprising:
a heat dissipation body frame that supports the heat dissipation body to fix the heat dissipation body in position between the heat transfer body and the busbar or to maintain a form of the heat dissipation body.

10. The cooling module of claim 9, wherein the heat dissipation body frame is made of a material having a predetermined insulating property.

11. The cooling module of claim 9, wherein the heat dissipation body frame comprises:
a bottom part covering a lower surface of the heat transfer body part; and
a side wall part covering a side surface of the heat transfer body part, and
wherein at least a portion of the heat dissipation body is interposed between a lower surface of the heat transfer body part and the bottom part and between a side surface of the heat transfer body part and the side wall part.

12. The cooling module of claim 11, wherein a contact hole to allow the heat absorption surface of the heat dissipation body to be exposed is provided on the bottom part.

13. The cooling module of claim 12, wherein the contact hole has a shape corresponding to a shape of the busbar.

14. The cooling module of claim 12, wherein the contact hole is provided in plurality to correspond to a number of the plurality of busbars.

15. The cooling module of claim 3, wherein the heat dissipation body is configured to surround an outer periphery of the cooling pipe, and the heat dissipation surface is in contact with the pipe coupling part.

16. The cooling module of claim 15, wherein the cooling pipe has a rectangular cross-section perpendicular to an extension direction.

17. The cooling module of claim 15, wherein the heat transfer body part has a block shape extending along an extension direction of the cooling pipe, and
wherein the pipe coupling part comprises a pipe coupling groove arranged to be recessed on one surface of the heat transfer body part so as to allow the cooling pipe surrounded by the heat dissipation body to be accommodated.

18. The cooling module of claim 17, wherein the heat transfer body comprises a heat dissipation fin provided on the other surface of the heat transfer body part so as to allow heat transferred to the heat transfer body part to be dissipated to the outside.

19. The cooling module of claim 1, wherein the heat dissipation body is made of a thermal conductive pad, a thermal conductive gel or a thermal conductive rubber.

20. A battery disconnect device comprising:
a disconnect module comprising a housing, a plurality of contactors arranged inside the housing to be electrically connected to an external power source and external loads, respectively, and at least one busbar electrically connected to at least one of the plurality of contactors; and
a cooling module comprising a heat transfer body coupled to the busbar to receive heat, a cooling pipe coupled to the heat transfer body to allow a cooling fluid to flow therein so as to receive the heat and dissipate it to the outside, and a heat dissipation body having a heat absorption surface that can be in contact with the busbar on one side thereof and having a heat dissipation surface that is in contact with the heat transfer body on the other side thereof,
wherein the heat dissipation body is interposed between the heat transfer body and the busbar and is made of a material having a predetermined elasticity or a predetermined fluidity that can be deformed to fit a shape therebetween at least during installation so as to seal therebetween.

21. The battery disconnect device of claim 20, wherein the external power source is a battery provided in an electric vehicle.
